# EUROPEAN PATENT APPLICATION

(11) **EP 4 779 216 A1**
(43) Date of publication of application: **22.07.2026**
(21) Application number: 26152541.4
(22) Date of filing: 19.01.2026
(51) Int. Cl.: F24D 3/14

(54) **METHOD FOR INSTALLING UNDERFLOOR HEATING OR COOLING**

(30) Priority: 21.01.2025 NL 2039654
(71) Applicant: Wienerberger AG, 1100 Wien (AT)
(72) Inventor: Milenovic, Ivan, 1100 Vienna (AT)
(74) Representative: Nederlandsch Octrooibureau

(57) **Abstract**

A method of installing underfloor heating and/or cooling, comprising determining heating and/or cooling requirements for one or more rooms (R1, R2); determining a room specific conduit layout for meeting the heating and/or cooling requirements of each room (R1, R2). For each room specific conduit layout, providing one or more prefabricated conduit mats (1) for arrangement on a floor surface (F1, F2) of the one or more rooms (R1, R2), wherein each prefabricated conduit mat (1) comprises an inlet and outlet end (3, 4) extending beyond the prefabricated conduit mat (1) over a first and second extension length (E1, E2) respectively; and based on the room specific conduit layout, arranging the prefabricated conduit mats (1) on the floor surface (F1, F2), and routing the inlet and outlet end (3, 4) of each prefabricated conduit mat (1) along the floor surface (F1, F2).

## Description

### Field of the invention

The present invention relates to a method for installing underfloor heating and/or cooling, in particular installing prefabricated conduit mats for underfloor heating and/or cooling.

### Background art

European patent application EP 3205945 A1 discloses a prefabricated floor part for floor heating and/or cooling, and further discloses a method for laying a floor heating and/or cooling. The prefabricated floor part comprises a roll-up carrier mat and a tube which is attached in meander or spiral form to the carrier mat and can be rolled up together with the carrier mat, wherein the carrier mat is embodied such that the carrier mat can be cut with a hand tool. The method for laying a floor heating and/or cooling comprises the steps of transporting one or more of the floor parts in rolled-up state to the building in which the floor heating and/or cooling has to be laid; unrolling the one or more floor parts onto the floor of the building so that a tube system for the floor heating and/or cooling is formed; and coupling each of the tubes of the one or more floor parts to a manifold or another tube of the floor heating and/or cooling.

International application WO 2019/031962 A1 discloses a floor heating mat for floor heating and/or cooling and method. The floor heating mat comprises a roll-up, cuttable carrier mat provided with a plurality of sub-sections which lie at least partially adjacently of each other after being placed in or on the ground surface; a conduit arranged on the carrier mat prior to placing of the carrier mat in or on the ground surface, wherein the conduit is provided with an enlarged loop at the position of a transition to a subsequent sub-section of the floor heating mat, and wherein the floor heating mat can be cut into and folded at the position of the transition, such that two adjacent sub-sections of a floor heating and/or cooling are connected by a continuous conduit. The method for providing a floor heating map involves steps such as providing a device for manufacturing a floor heating mat as mentioned; determining dimensions and configuration of the floor heating mat; reading the determined dimensions and configuration; supplying conduit and mat to the device; arranging conduits on a mat in accordance with the dimensions and configuration; and removing the floor heating mat from the device, wherein the determining of dimensions and configuration of the floor heating mat comprises of determining a transition to the subsequent sub-section and providing the enlarged loop at the position of the transition. In an embodiment, the method may involve positioning the floor heating mat in or on the ground surface; cutting into and folding the floor heating mat close to the transition; and continuing uninterrupted installation of the floor heating mat in a different direction.

Prior art methods and heating mats of the type identified above may still require time consuming installation procedures due to insufficient planning and the lack of proper installation guidance onsite.

### Summary

The present invention relates to a method for installing underfloor heating and/or cooling, in particular installing prefabricated conduit mats for underfloor heating and/or cooling purposes. The method aims to reduce onsite complexity of installing underfloor heating or cooling in various types of rooms and spaces whilst still providing the ability to accurately meet heating and/or cooling requirements. The method further reduces the time needed to install underfloor heating and/or cooling and minimizing errors.

According to the present invention, a method for installing underfloor heating and/or cooling is provided and comprises the steps of:
a) determining heating and/or cooling requirements for one or more rooms of a building;
b) determining a room specific conduit layout for meeting the heating and/or cooling requirements of each room; and for each room specific conduit layout,
c) providing one or more prefabricated conduit mats to be arranged on a floor surface of the corresponding room of the one or more rooms, wherein each prefabricated conduit mat of the one or more prefabricated conduit mats comprises a meandering conduit for transporting a heating and/or cooling fluid, wherein the meandering conduit comprises an inlet end and an outlet end, wherein the inlet end and the outlet end extend beyond the prefabricated conduit mat over a first extension length and a second extension length respectively;
and based on the room specific conduit layout for each room,
d) arranging the one or more prefabricated conduit mats on the floor surface of the corresponding room, and
e) routing the inlet end and outlet end of the meandering conduit of each prefabricated conduit mat of the one or more prefabricated conduit mats along the floor surface of the corresponding room.

According to the invention, arranging each prefabricated conduit mat of the one or more prefabricated conduit mats along the floor surface of the corresponding room ensures that a required meandering conduit pattern for each meandering conduit is readily acquired for the corresponding room according to the room specific conduit layout for meeting the heating and/or cooling requirements. The arrangement of prefabricated conduit mats avoids progressive manual placement of a conduit, one bend or turn at the time, along the floor surface for obtaining a meandering pattern, wherein such progressive manual placement of a conduit is time consuming and prone to error. Furthermore, according to the invention, routing the inlet end and outlet end of each prefabricated conduit mat along the floor surface allows for fast and simple connection of each of the prefabricated conduit mats to a manifold.

### Short description of drawings

The present invention will be discussed in more detail below, with reference to the attached drawings, in which:
Figure 1 depicts an example of prefabricated conduit mats arranged in various rooms of a building for providing underfloor heating and/or cooling according to an embodiment of the present invention;
Figure 2A depicts a prefabricated conduit mat according to an embodiment of the present invention;
Figure 2B depicts a prefabricated conduit mat according to another embodiment of the present invention;
Figure 3 depicts a prefabricated conduit mat provided as a roll or in a rolled up state according to an embodiment of the present invention;
Figure 4 depicts a cut and folded prefabricated conduit mat according to an embodiment of the present invention.

### Detailed description of embodiments

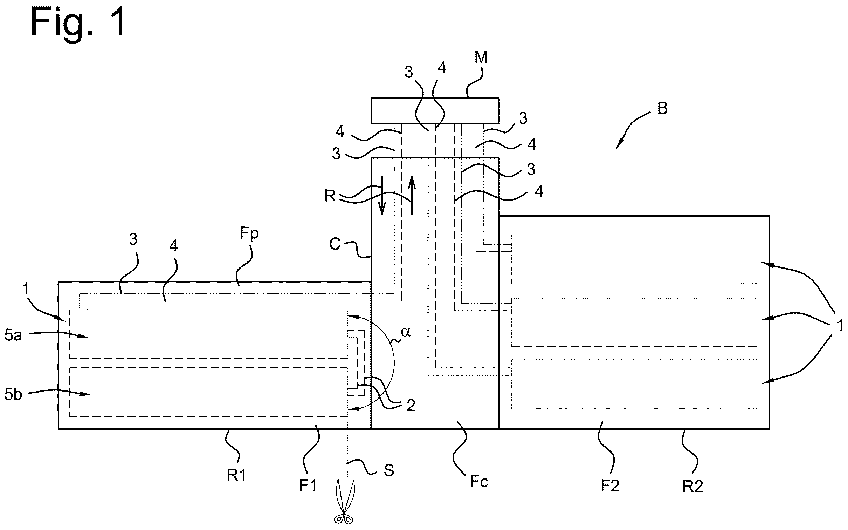

Referring to Figure 1 there is shown an example of a schematic floor layout or arrangement of prefabricated conduit mats 1 for providing underfloor heating and/or cooling to various rooms R1, R2 of a building B. The schematic floor layout is exemplary and it will be understood that the number of rooms as well as the sizes and shapes thereof depend on the specific building B. Although not explicitly shown, the prefabricated conduit mats 1 are usually arranged in rows or columns on insulated floor panels, for example, and covered by a screed layer that is to be heated or cooled. As will be further explained by embodiments set forth below, a prefabricated conduit mat 1 as described herein is configured for underfloor heating and/or cooling by utilizing a suitable fluid for exchanging heat with the floor. In an exemplary embodiment, a prefabricated conduit mat 1 of the type utilized for the present invention may be configured for connection to a manifold M for receiving a heating and/or cooling fluid therefrom and to recirculate this fluid back to the manifold M, wherein recirculation of the heating and/or cooling fluid is shown as the pair of arrow "R" in Figure 1. Heat is being exchanged with the floor as the heating and/or cooling fluid travels through the prefabricated conduit mat 1.

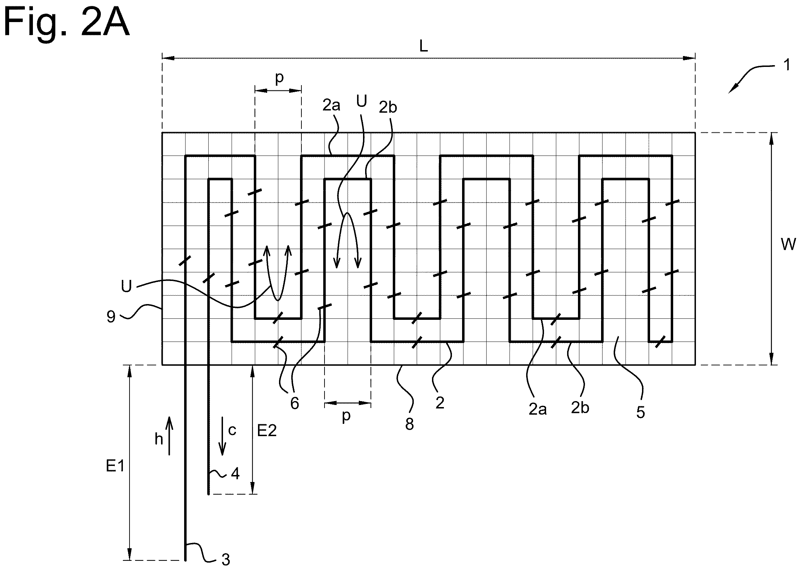

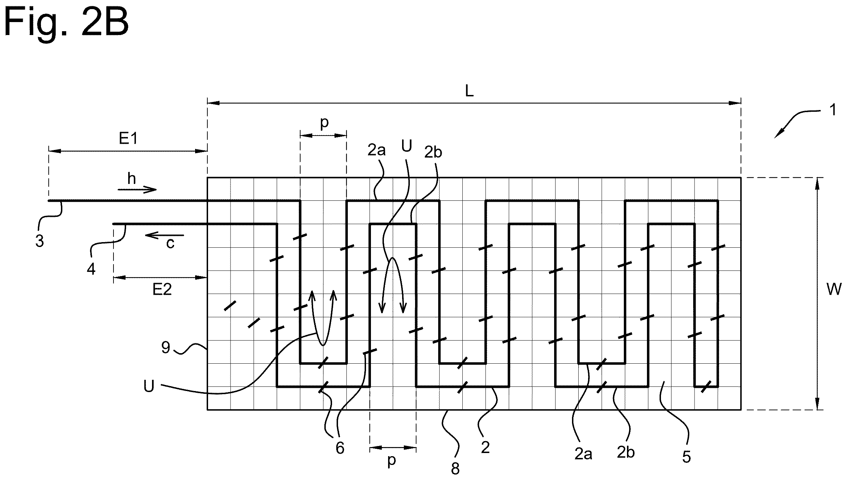

Figure 2A and 2B each show an exemplary embodiment of a prefabricated conduit mat 1 as used in the method of the present invention. The prefabricated conduit mat 1 is provided with a meandering conduit or pipe 2 for transporting the heating and/or cooling fluid mentioned earlier. The meandering conduit 2 comprises an inlet end 3 and an outlet end 4, and wherein the inlet end 3 and the outlet end 4 extend beyond the prefabricated conduit mat 1 over a first extension length E1 and a second extension length E2 respectively.

In an exemplary embodiment, as depicted in Figure 1, the inlet end 3 and the outlet end 4 are connectable to a manifold M for receiving and returning the heating and/or cooling fluid. In an embodiment, the prefabricated conduit mat 1 comprises a substantially flat substrate 5 to which the meandering conduit 2 is affixed, e.g. affixed to one of two sides of the substrate 5. In a further embodiment, the substrate 5 is a mesh 5, e.g. a wire mesh 5. In an even further embodiment the mesh 5 may be made of a metal, a metal alloy, plastic material or any combination thereof. Typically, in use the substrate 5 rests on a floor surface and the meandering conduit 2 rests on top of the substrate 5, e.g. on top of the mesh 5.

In the embodiments of Figure 2A and 2B it is shown that the meandering conduit 2 may be affixed to the substrate 5 by means a plurality of fasteners 6, such as tie wraps, steel wire and the like. These fasteners 6 are spaced apart and distributed along the substrate 5 such that the meandering conduit 2 maintains its meandering pattern and placement along the substrate 5. In an embodiment, the substrate 5, e.g. the mesh 5, is rectangular having a length L substantially lager than a width W of the substrate, i.e. L >> W. Since the main components of a prefabricated conduit mat 1 are the substrate 5 and the meandering conduit 2, the length L and width W of the substrate 5 can be considered representative of the length L and width W of the prefabricated conduit mat 1. Even though the prefabricated conduit mat 1 could be square, e.g. L ≈ W, in most cases the prefabricated conduit mat 1 will be rectangular, e.g. L >> W, for row or columns wise arrangement.

From Figure 2A and 2B it further follows that, in an embodiment, both the inlet end 3 and the outlet end 4 of the meandering conduit 2 extend beyond the prefabricated conduit mat 1, e.g. the substrate 5, over the first extension length E1 and the second extension length E2, respectively, and are configured for connection to a manifold M.

In the embodiment shown in Figure 2A, the inlet end 3 and the outlet end 4 extend beyond the prefabricated conduit mat 1, e.g. the substrate 5, over the first extension length E1 and the second extension length E2 across a first side edge 8 of the prefabricated conduit mat 1, e.g. the substrate 5, wherein the first side edge 8 defines the length L as mentioned above. In the alternative embodiment as shown in Figure 2B, the inlet end 3 and the outlet end 4 extend beyond the prefabricated conduit mat 1, e.g. the substrate 5, over the first extension length E1 and the second extension length E2 across a second side edge 9 of the prefabricated conduit mat 1, e.g. the substrate 5, wherein the second side edge 9 defines the width W as mentioned above.

From Figure 2A it follows that the inlet end 3 and the outlet end 4 may extend beyond a longest side edge, i.e. the first side edge 8, of the prefabricated conduit mat 1, assuming that the prefabricated conduit mat 1 is rectangular, i.e. L >>W. Alternatively, from Figure 2B it follows that the inlet end 3 and the outlet end 4 may extend beyond a shortest side edge, i.e. the second side edge 9, of the prefabricated conduit mat 1, assuming that the prefabricated conduit mat 1 is rectangular, i.e. L >>W.

The embodiments of Figure 2A and 2B provide alternative ways on how the inlet end 3 and the outlet end 4 may extend beyond the prefabricated conduit mat 1 depending on, for example, requirements of the room specific conduit layout. In one scenario it may be more convenient to allow the inlet end 3 and the outlet end 4 to extend across the shortest side edge of the prefabricated conduit mat 1. In another scenario it may be more convenient to allow the inlet end 3 and the outlet end 4 to extend across the longest side edge of the prefabricated conduit mat 1.

The meandering conduit 2 may be characterised by a pitch distance p between each parallel loop section U of the meandering conduit 2. This distance may be chosen based on heating and/or cooling requirements for a prefabricated conduit mat 1. For example, let the length L and width W of the substrate 5, i.e. the prefabricated conduit mat 1, remain unchanged, then decreasing the pitch distance p provides for a denser meandering conduit 2 for higher heat transfer capability of the prefabricated conduit mat 1. Conversely, increasing the pitch distance p will result in lower heat transfer capability of the prefabricated conduit mat 1.

It is further noted that Figure 2A and 2B depict an embodiment wherein the meandering conduit 2 of a prefabricated conduit mat 1 is a double meandering conduit 2 that comprises two spaced apart parallel meandering conduit lines 2a, 2b. As a result, in use the heating and/or cooling fluid flows in opposite directions through the parallel meandering conduit lines 2a, 2b to achieve even heat and/or cooling distribution across the prefabricated conduit mat 1.

It is important to note that the term "prefabricated" in the sense of the present disclosure implies that the prefabricated conduit mat 1 is seen as a single unit manufactured remotely and transported to the building B for installation. For example, the substrate 5 as well as the meandering conduit 2 affixed thereto are designed and manufactured to the required dimensions and assembled offsite. Once assembled, the prefabricated conduit mat 1 can be transported to an onsite location, i.e. the building B to be provided with underfloor heating and/or cooling.

Based on the above and Figures 1 and 2A, 2B, the method of the present invention can now be explained in further detail. As a first step of the method, step a), the heating and/or cooling requirements for one or more rooms R1, R2 of the building B need to be determined. For example, the number of rooms R1, R2 to be provided with underfloor heating and/or cooling are determined as well as their heating and/or cooling requirements. Naturally, the heating and/or cooling requirements of the one or more rooms R1, R2 depend on the size and shape of the rooms R1, R2 as well as insulation levels.

When the one or more rooms R1, R2 have been identified and the heating and/or cooling requirements thereof have been determined, the method may further comprise the step of b) determining a room specific conduit layout for meeting the heating and/or cooling requirements of each room R1, R2. In particular, in this step a room specific layout of one or more conduits for transporting a heating and/or cooling fluid is determined for each of the rooms R1, R2 such that the heating and/or cooling requirements of each room are met. Therefore, the room specific conduit layout applies to a specific room and may be seen as prescribing a meandering conduit pattern of one or more conduits to be arranged on the floor surface of the corresponding room.

Based on the room specific conduit layout for each room R1, R2, the method of the present invention further comprises the step of c) providing one or more prefabricated conduit mats 1 to be arranged on a floor surface F1, F2 of a corresponding room of the one or more rooms R1, R2, wherein each prefabricated conduit mat 1 of the one or more prefabricated conduit mats 1 comprises a meandering conduit 2 for transporting a heating and/or cooling fluid. So in this step the one or more prefabricated conduit mats 1 are provided for arrangement in a specific room R1, R2 based on the corresponding room specific conduit layout.

A shown in Figure 2A and 2B, the meandering conduit 2 comprises an inlet end 3 and an outlet end 4, wherein the inlet end 3 and the outlet end 4 extend beyond the prefabricated conduit mat 1, e.g. the substrate 5, over a first extension length E1 and a second extension length E2 respectively.

Further, based on the room specific conduit layout for each room R1, R2, the method further comprises the steps of
d) arranging the one or more prefabricated conduit mats 1 on the floor surface F1, F2 of the corresponding room R1, R2, and
e) routing the inlet end 3 and outlet end 4 of the meandering conduit 2 of each prefabricated conduit mat 1 of the one or more prefabricated conduit mats 1 along the floor surface F1, F2 of the corresponding room R1, R2.

According to the present invention, the one or more prefabricated conduit mats 1 provided to meet the room specific conduit layout of a specific room eliminates progressive manual placement of a conduit, bend by bend, along the floor surface to achieve a required meandering conduit pattern. Instead, by arranging the one or more prefabricated conduit mats 1 on the floor surface F1, F2 of the corresponding room R1, R2 quickly yields the required room specific conduit layout by virtue of the meandering conduits 2 comprised by the one or more prefabricated conduit mats 1. Furthermore, as the inlet end 3 and the outlet end 4 of the meandering conduit 2 extend beyond the prefabricated conduit mat 1 allows for quick and convenient routing along any suitable path to a manifold M.

According to the present method, the one or more prefabricated conduit mats 1 as determined by the room specific conduit layout for each room R1, R2 makes it unambiguously clear how each of the prefabricated conduit mats 1 are to be arranged in the corresponding room R1, R2 and how the inlet end 3 and the outlet end 4 of each prefabricated conduit mat 1 are to be routed. This greatly decreases the time needed to provide underfloor heating and/or cooling as well as minimizing errors onsite since each of the prefabricated conduit mats 1 exhibits the proper length L, width W, meandering conduit 2 and pitch distance p thereof, as well as the required first and second extension length E1, E2 of the inlet end 3 and outlet end 4 for correct arrangement on and along the floor surface F1, F2 of the corresponding room R1, R2.

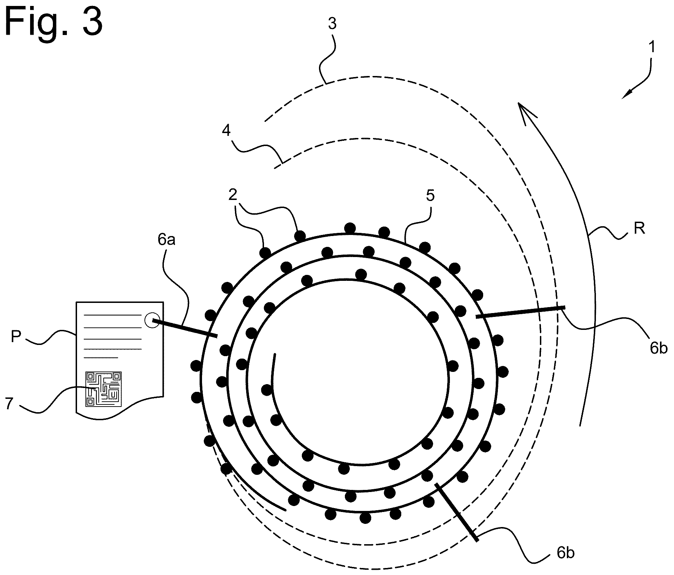

Referring to Figure 3 there is shown an embodiment of a prefabricated conduit mat 1 provided as a roll or in a rolled up state according to an embodiment of the present invention. In the embodiment as depicted, the prefabricated conduit mat 1 may comprises a substrate 5 of sufficient flexibility to be rolled up. As the meandering conduit 2 is affixed to the substrate 5, the substrate 5 and the meandering conduit 2 can be rolled up in unison. Subsequently, the inlet end 3 and the outlet end 4 of the meandering conduit 2 may be wrapped, see arrow R, around the roll to achieve compact storage dimensions. By providing a prefabricated conduit mat 1 in a rolled up state reduces transportation space and storage space onsite as well as facilitating convenient handling of the prefabricated conduit mat 1 through the building B. Therefore, in an embodiment of the method, each prefabricated conduit mat 1 of the one or more prefabricated conduit mats 1 may comprise a substrate 5 having affixed thereto the meandering conduit 2, thereby maintaining the meandering shape of the meandering conduit 2 across the prefabricated conduit mat 1, e.g. the substrate 5, and allows the prefabricated conduit mat 1 to be rolled up without movement or displacement of the meandering conduit 2.

Referring to Figure 3, there is provided an embodiment wherein the step of c) may comprise providing each prefabricated conduit mat 1 of the one or more prefabricated conduit mats 1 as a roll or in a rolled up state, and wrapping the inlet end 3 and the outlet end 4 of the meandering conduit 2 around the roll, i.e. around the corresponding rolled up portion of the prefabricated conduit mat 1, e.g. the substrate 5. By rolling up each prefabricated conduit mat 1 and wrapping the inlet end 3 and outlet end 4 thereof around the rolled up prefabricated conduit mat 1 facilitates transport and storage onsite of each prefabricated conduit mat 1 as well as preventing the inlet end 3 and outlet end 4 from tangling. This embodiment of the method further ensures that each of the prefabricated conduit mats 1 are provided as a single unit that is easy to handle, stored and moved to the corresponding rooms R1, R2 in which placement is required.

In a further embodiment the step of c) comprises providing an installation guide P for each prefabricated conduit mat 1 of the one or more prefabricated conduit mats 1, and wherein the step d) comprises arranging each prefabricated conduit mat 1 according to the corresponding installation guide P, and wherein the step of c) comprises routing the inlet end 3 and outlet end 4 of each prefabricated conduit mat 1 according to the corresponding installation guide P. The installation guide P is specific for each prefabricated conduit mat 1 and allows for detailed guidance for installing the prefabricated conduit mat 1 according to step c) and d). Therefore, detailed installation instructions are available for each prefabricated conduit mat 1 such that it is unambiguously clear how a particular prefabricated conduit map 1 is to be arranged along the floor surface F1, F2 of the corresponding room R1, R2 and how the inlet end 3 and outlet end 4 of the meandering conduit 2 are to be routed along the floor surface F1, F2. Providing the installation guide P increases clarity and reduces errors onsite as there can be no confusion what to do with a particular prefabricated conduit mat 1. In an embodiment, the installation guide P may comprise a local part and a global part, wherein the local part provides detailed installation instructions for arranging the corresponding prefabricated conduit mat 1 along the floor surface F1, F2 of the corresponding room R1, R2, and wherein the global part provides detailed instructions on how, for example, the corresponding prefabricated conduit mat 1 is to be fitted and connected to the entire under floor heating/cooling system across the one or more rooms R1, R2.

In a convenient embodiment, the step of c) may further comprise the step of attaching the installation guide P to each prefabricated conduit mat 1 of the one or more prefabricated conduit mats 1. This embodiment ensures that each prefabricated conduit mat 1 can be dealt with as a single unit onsite and that relevant installation instructions can be found at the prefabricated conduit mat 1. Furthermore, by attaching the installation guide P to each prefabricated conduit mat 1, it is possible to store and transport the one or more prefabricated conduit mats 1 to a building site without the need for clustering the one or more prefabricated conduit mats 1 on a room by room basis. Once onsite, the installation guide P will show where and how the prefabricated conduit mat 1 is to be installed.

As further shown in Figure 3, in an embodiment the method step c) may comprise attaching the installation guide P to each prefabricated conduit mat 1 of the one or more prefabricated conduit mats 1 by using one or more first auxiliary fasteners 6a, such as a tie wrap or steel wire. The first auxiliary fasteners 6a may be conveniently cut to detach the installation guide P from the corresponding prefabricated conduit mat 1. In an advantageous embodiment, the first auxiliary fasteners 6a may be provided with a colour different from a colour of the fasteners 6 used for affixing the meandering conduit 2 to the substrate 5 as mentioned earlier, wherein the colour of the first auxiliary fasteners 6 may be chosen to indicate that the first auxiliary fasteners 6a are to be cut and removed but not the fasteners 6.

In a similar embodiment, the step of c) may comprise providing each prefabricated conduit mat 1 of the one or more prefabricated conduit mats 1 as a roll or in a rolled up state, and wrapping the inlet end 3 and the outlet end 4 of the meandering conduit 2 around the roll, i.e. around the corresponding rolled up portion of the prefabricated conduit mat 1, e.g. the substrate 5. Then, in addition, method step c) may further comprise attaching the wrapped inlet end 3 and outlet end 4 to the prefabricated conduit mat 1, e.g. the substrate 5, by using one or more second auxiliary fasteners 6b, such as a tie wrap or steel wire. The second auxiliary fasteners 6b may be conveniently cut to detach the wrapped inlet end 3 and the outlet end 4 from the corresponding prefabricated conduit mat 1, e.g. the substrate 5. In an advantageous embodiment, the second auxiliary fasteners 6a may be provided with a colour different from a colour of the fasteners 6 used for affixing the meandering conduit 2 to the substrate 5 as mentioned earlier, wherein the colour of the second auxiliary fasteners 6 may be chosen to indicate that the second auxiliary fasteners 6b are to be cut and removed but not the fasteners 6. In an embodiment, the one or more first auxiliary fasteners 6a and the one or more second auxiliary fasteners 6b may be provided with an identical colour different from a colour of the fasteners 6. In this way it is clearly indicated which fasteners may and/or must be cut and removed when installing the prefabricated conduit mat 1.

To further increase speed and convenience of handling of the one or more prefabricated conduit mats 1 for each room R1, R2, there is provided an embodiment wherein the method further comprises the step of providing the installation guide P with a visual marker 7, wherein the visual marker encodes a hyperlink. This embodiments avoids having a large installation guide P attached to a prefabricated conduit mat 1, thereby minimizing weight and prevent inconvenient handling of the installation guide P itself. The visual marker enables a person to quickly scan the visual marker and to be redirected to online instructions belonging to the prefabricated conduit mat 1 to which the installation guide P is attached. In an exemplary embodiment, the visual market 7 may be QR which easily scannable by a mobile device to retrieve specific and detailed instructions on arranging the specific prefabricated conduit mat 1 along the floor surface F1, F2 of the corresponding room R1, R2 according to step d) as well as detailed instructions on how to route the inlet end 3 and outlet end 4 of the meandering conduit 2 according to step c).

As mentioned earlier, in an advantageous embodiment the method comprises the step of providing each prefabricated conduit mat 1 as a roll, see Figure 3, and wherein the inlet end 3 and the outlet end 4 of the meandering conduit 2 can be wrapped around the roll. Furthermore, in other advantageous embodiments an installation guide P specific to each prefabricated conduit mat 1 can be provided, and wherein the installation guide P may be conveniently attached to the prefabricated conduit mat 1.

When the one or more prefabricated conduit mats 1 for the corresponding room R1, R2 are available in a rolled up state, then in an embodiment the step of d) may comprises unrolling each prefabricated conduit mat 1 of the one or more prefabricated conduit mats 1 on the floor surface F1, F2 of the corresponding room R1, R2 according to the installation guide P. By unrolling each prefabricated conduit mat 1 from a rolled up state to an unrolled state also unrolls the meandering conduit 2 with the prescribed pitch distance p. Standard procedures of progressive manual placement of a conduit, bend by bend, along a floor surface is thereby eliminated. Merely unrolling each prefabricated conduit mat 1 and arranging, positioning etc. each prefabricated conduit mat 1 according to the installation guide P thereof will quickly achieve the room specific conduit layout with higher speed. Furthermore, as discussed earlier, the installation guide P may also provide clear instructions to subsequently route the inlet end 3 and outlet end 4 of each prefabricated conduit mat 1 along the floor surface F1, F2 of the corresponding room R1, R2.

When the one or more prefabricated condition mats 1 have been arranged in the corresponding room R1, R2, it may be the case that the floor surface F1, F2 thereof, may not be fully covered by meandering conduits 2 of the one or more prefabricated conduit mats 1. In such a case there may be a free surface part Fp of the corresponding room R1, R2 not yet covered by the one or more prefabricated conduit mats 1 as exemplified by room R1 in Figure 1. Such a free surface part Fp may be utilized to route the inlet end 3 and the outlet end 4 toward a manifold M, for example, without crossing the one or more prefabricated conduit mats 1 of the corresponding room R1. In the exemplary embodiment as depicted, the free surface part Fp may extend along a perimeter of the corresponding room R1.

In a further embodiment, not shown, the free surface part Fp may comprise two or more disjoint surface sections. That is, it may be the case that once the one or more prefabricated conduit mats 1 are arranged along the floor surface F1, F2, that the free surface part Fp comprises two or more disjoint surface sections. These two or more disjoint surface sections may each be covered by the inlet end 3 and outlet end 4 of the one or more prefabricated conduit mats 1 depending on the location and shape of the two or more disjoint surface sections.

Therefore, by taking the aforementioned free surface part Fp into account, the step of e) of the method may comprise routing the inlet end 3 and the outlet end 4 of each prefabricated conduit mat 1 of the one or more prefabricated conduit mats 1 along the free surface part Fp of the floor surface F1, F2 of the corresponding room R1, R2 not covered by the one or more prefabricated conduit mats 1. By virtue of the inlet end 3 and outlet end 4 of the meandering conduit 2 extending beyond the prefabricated conduit mat 1, e.g. beyond the substrate 5, allows convenient routing of the inlet end 3 and the outlet end 4 toward a manifold M without crossing one or more prefabricated conduit mats 1 in the corresponding room R1, R2.

Note that underfloor heating and/or cooling may be provided to the free surface part Fp by routing the inlet end 3 and the outlet end 4 there along. In an advantageous embodiment, not depicted in Figure 1, the step of e) may further comprise routing the inlet end 3 and outlet end 4 of one or more prefabricated conduit mats 1 of the corresponding room R1, R2 along the free surface part Fp in meandering manner. By routing the inlet end 3 and outlet end 4 in meandering manner along the free surface part Fp provides for additional flexibility for providing under floor heating and/or cooling to the corresponding room R1, R2.

The installation guide P as mentioned earlier may also specify how the inlet end 3 and outlet end 4 of the meandering conduit 2 may be routed in meandering manner along the free surface part Fp according to the room specific conduit layout for achieving the heating and/or cooling requirements. That is, when designing the one or more prefabricated conduit mats 1, an embodiment is conceivable wherein the inlet end 3 and the outlet end 4 are provided with a prescribed first extension length E1 and a second extension length E2, respectively, taking into account that a meandering pattern may need to be made by the inlet end 3 and the outlet end 4.

Regarding the first and second extension lengths E1, E2 of the inlet end 3 and outlet end 4 respectively, in an embodiment the first extension length E1 and the second extension length E2 may be equal. In this embodiment there may not be special routing needs and both the inlet end 3 and the outlet end 4 may need to be routed efficiently to a manifold M along a similar distance along a free surface part Fp. Alternatively, there may be special routing needs in that both the inlet end 3 and the outlet end 4 need to be routed in meandering fashion along a similar distance along a free surface part Fp. In these exemplary scenarios it may be advantageous to specify equal first and second extension lengths E1, E2, so that very little to no onsite adjustments to the inlet end 3 and outlet end 4 are needed to connect to the manifold M.

In an alternative embodiment, the first extension length E1 and the second extension length E2 are unequal. In this embodiment there may be special routing needs for the inlet end 3 and the outlet end 4 that cannot be efficiently achieved by utilizing equal first and second extension lengths E1, E2. For example, there may be a scenario wherein the inlet end 3 needs to be routed substantially differently than the outlet end 4, or vice versa. As a result, prescribing different first and second extensions lengths E1, E2 prevents substantial onsite modification, e.g. shortening, of the inlet 3 or outlet end 4, thereby making the installation process time consuming and prone to error.

In a further advantageous embodiment, the method step of c) comprises including a first additional length portion ΔE1 in the first extension length E1 and/or a second additional length portion ΔE2 in the second extension length E2. That is, E1 = E1'+ΔE1 and E2=E2'+ΔE2, wherein E1' and E2' may be calculated or expected extension lengths needed based on detailed floor plans. However, in this embodiment the first and/or the second extension lengths E1, E2 may be longer than calculated to deal with or anticipate unexpected situations onsite, such as unexpected routing requirements in method step e).

According to the present invention, the method utilizes one or more prefabricated conduit mats 1 for each room R1, R2 to be provided with underfloor heating and/or cooling. In an embodiment, each prefabricated conduit mat 1 comprises a substrate 5 and meandering conduit 2 affixed thereto and wherein the meandering conduit 2 has a prescribed pitch distance p as exemplary depicted in Figure 2A, 2B. However, in particular cases minor changes to the meandering conduit 2 of a particular prefabricated conduit mat 1 may be needed once the one or more prefabricated conduit mats 1 are arranged on the floor surface F1 of the corresponding room R1, R2. To that end there is provided an embodiment wherein the step of d) comprises detaching at least in part the meandering conduit 2 from the substrate 5, and rearranging the meandering conduit 2 along the substrate 5. This embodiment may be particular advantageous when the meandering conduit 2 would interfere with an obstacle in the floor surface F1, F2, such as a pipe or hole for example. In such a case the meandering conduit 2 can be locally detached or released from the substrate 5 and routed differently to avoid the obstacle. Therefore, the one or more prefabricated conduit mats 1 can be arranged as fast and accurate as required, but making local changes to a meandering conduit 2 remains possible should unforeseen obstacles be present. In an exemplary embodiment, the meandering conduit 2 can be detached. e.g. locally, by cutting one or more of the fasteners 6 as mentioned above.

In Figure 1 it is further shown that, in addition to the one or more rooms R1, R2 of the building B, there may be a corridor C that connects the one or more rooms R1, R2 for providing access thereto. Even though a corridor C can be considered to be a room, it may not need the same level of underfloor heating and/or cooling as compared to the one or more rooms R1, R2. Instead of providing one or more prefabricated conduit mats 1 for underfloor heating and/or cooling of the corridor C, it may be sufficient to utilize the inlet end 3 and outlet end 4 of one of more prefabricated conduit mats 1 of the one or more rooms R1, R2 to provide the heating and/or cooling required. So an embodiment may be considered wherein the building B comprises a corridor C, in addition to the one or more rooms R1, R2, and wherein the step of e) further comprises routing the inlet end 3 and outlet end 4 of one or more prefabricated conduit mats 1 arranged in one or more rooms of the one or more rooms R1, R2 along a floor surface Fc of the corridor C. By routing the inlet end 3 and outlet end 4 of one of more prefabricated conduit mats 1 along the floor surface Fc of the corridor C reduces the number of prefabricated conduit mats 1 needed for the building B, so that efficient use of materials is made whilst still meeting heating and/or cooling requirements. In Figure 1 it is further shown that the various inlet ends 3 and outlet ends 4 can be connected to a manifold M arranged in the corridor C. Note that Figure 1 depicts an embodiment wherein the inlet ends 3 and outlet ends 4 are arranged in straight manner along the floor surface Fc of the corridor C. However, in an alternative embodiment the step of e) may comprise routing the inlet end 3 and outlet end 4 in meandering fashion along the floor surface Fc of the corridor C. This embodiment may be advantageous when higher levels of heating and/or cooling are required for the corridor which is not achievable by routing the inlet end 3 and outlet end 4 in straight manner along the floor surface Fc.

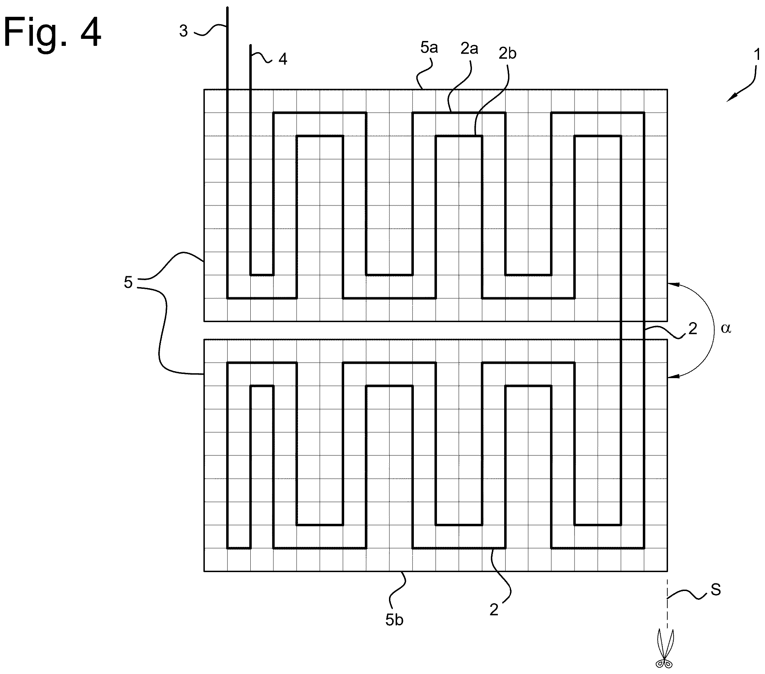

Referring to Figure 4, an embodiment of a folded prefabricated conduit mat 1 is depicted, so wherein the prefabricated conduit mat 1 is cut along a cutting line S, except the meandering conduit 2, and folded over an angle α, e.g. 180° degrees, so that a single prefabricated conduit mat 1 could cover a particular floor surface which would otherwise require two prefabricated conduit mats 1. Here it is assumed that the prefabricated conduit mat 1 is rectangular and cut laterally as shown in Figure 4.

For example, room R1 in Figure 1 of the one or more rooms R1, R2 shows a single prefabricated conduit mat 1 which is cut and folded over 180° degrees to cover the floor surface F1 of room R1 by two parallel rows. The inlet end 3 and outlet end 4 are connected to the manifold M arranged in the corridor C, thereby highlighting the advantage provided by the first and second extension length E1, E2. Room R2 as depicted in Figure 1 utilizes three prefabricated conduit mats 1 in a row wise arrangement, wherein the inlet end 3 and the outlet end 4 of each of the three prefabricated conduits mats 1 are also connected to the manifold M in corridor C.

As mentioned earlier, a prefabricated conduit mat 1 may comprise a substrate 5 having attached thereto the meandering conduit 2. In case the substrate 5 is a mesh, e.g. a steel mesh, then this mesh 5 can be cut as indicated along the cutting line S and folded over the angle α. Therefore, step d) of the method may further comprise cutting one or more prefabricated conduit mats of the one or more prefabricated conduit mats 1 along a cutting line S and folding the one or more prefabricated conduit mats 1 over an angle α between 0° and 180° degrees.

In view of the above, the present invention can now be summarised by the following embodiments:
Embodiment 1. A method of installing underfloor heating and/or cooling, comprising the steps of
   a) determining heating and/or cooling requirements for one or more rooms (R1, R2) of a building (B);
   b) determining a room specific conduit layout for meeting the heating and/or cooling requirements of each room (R1, R2), and for each room specific conduit layout,
   c) providing one or more prefabricated conduit mats (1) to be arranged on a floor surface (F1, F2) of the corresponding room of the one or more rooms (R1, R2), wherein each prefabricated conduit mat (1) of the one or more prefabricated conduit mats (1) comprises a meandering conduit (2) for transporting a heating and/or cooling fluid, wherein the meandering conduit (2) comprises an inlet end (3) and an outlet end (4), wherein the inlet end (3) and the outlet end (4) extend beyond the prefabricated conduit mat (1) over a first extension length (E1) and a second extension length (E2) respectively;
      and based on the room specific conduit layout for each room (R1, R2),
   d) arranging the one or more prefabricated conduit mats (1) on the floor surface (F1, F2) of the corresponding room (R1, R2), and
   e) routing the inlet end (3) and outlet end (4) of the meandering conduit (2) of each prefabricated conduit mat (1) of the one or more prefabricated conduit mats (1) along the floor surface (F1, F2) of the corresponding room (R1, R2).
Embodiment 2. The method according to embodiment 1, wherein the step of c) comprises providing each prefabricated conduit mat (1) of the one or more prefabricated conduit mats (1) as a roll, and wrapping the inlet end (3) and the outlet end (4) of the meandering conduit 2 around the roll.
Embodiment 3. The method according to embodiment 1 or 2, wherein the step of c) further comprises providing an installation guide (P) for each prefabricated conduit mat (1) of the one or more prefabricated conduit mats (1), and wherein the step of d) comprises arranging each prefabricated conduit mat (1) according to the corresponding installation guide (P) and wherein the step of c) comprises routing the inlet end (3) and outlet end (4) of each prefabricated conduit mat (1) according to the corresponding installation guide (P).
Embodiment 4. The method according to embodiment 3, where the step of c) further comprises attaching the installation guide (P) to each prefabricated conduit mat (1) of the one or more prefabricated conduit mats (1).
Embodiment 5. The method according to according to embodiment 3 or 4, further comprising providing the installation guide (P) with a visual marker (7), wherein the visual marker encodes a hyperlink.
Embodiment 6. The method according to embodiment 2 and any of embodiments 3-5, wherein the step of d) comprises unrolling each prefabricated conduit mat (1) of the one or more prefabricated conduit mats (1) on the floor surface (F1, F2) of the corresponding room (R1, R2) according to the installation guide (P).
Embodiment 7. The method according to any of embodiments 1-6, wherein the step of e) comprises routing the inlet end (3) and the outlet end (4) of each prefabricated conduit mat (1) of the one or more prefabricated conduit mats (1) along a free surface part (Fp) of the floor surface (F1, F2) of the corresponding room (R1, R2) not covered by the one or more prefabricated conduit mats (1).
Embodiment 8. The method according to embodiment 7, further comprising routing the inlet end (3) and outlet end (4) of one or more prefabricated conduit mats (1) of the corresponding room (R1, R2) along the free surface part (Fp) in meandering manner.
Embodiment 9. The method according to any of embodiments 1-8, wherein the meandering conduit (2) of each prefabricated conduit mat (1) of the one or more prefabricated conduit mats (1) is a double meandering conduit (2) comprising two spaced apart parallel meandering conduit lines (2a, 2b).
Embodiment 10. The method according to any of embodiments 1-9, wherein each prefabricated conduit mat (1) of the one or more prefabricated conduit mats (1) comprises a substrate (5) having affixed thereto the meandering conduit (2).
Embodiment 11. The method according to embodiment 10, wherein the step of d) comprises detaching at least in part the meandering conduit (2) from the substrate (5), and rearranging the meandering conduit (2) along the substrate (5).
Embodiment 12. The method according to any of embodiments 1-11, wherein the first extension length (E1) and the second extension length (E2) are equal.
Embodiment 13. The method according to any of embodiments 1-11, wherein the first extension length (E1) and the second extension length (E2) are unequal.
Embodiment 14. The method according to any of embodiments 1-13, wherein the building (B) comprises a corridor (C), and wherein the step of e) further comprises routing the inlet end (3) and outlet end (4) of one or more prefabricated conduit mats (1) arranged in one or more rooms of the one or more rooms (R1, R2) along a floor surface (Fc) of the corridor (C).
Embodiment 15. The method according to embodiment 14, wherein the step of e) further comprises routing the inlet end (3) and outlet end (4) in meandering fashion along the floor surface (Fc) of the corridor (C).

The present invention has been described above with reference to a number of exemplary embodiments as shown in the drawings. Modifications and alternative implementations of some parts or elements are possible, and are included in the scope of protection as defined in the appended claims.

## Claims

1. A method of installing underfloor heating and/or cooling, comprising the steps of
a) determining heating and/or cooling requirements for one or more rooms (R1, R2) of a building (B);
b) determining a room specific conduit layout for meeting the heating and/or cooling requirements of each room (R1, R2), and for each room specific conduit layout,
c) providing one or more prefabricated conduit mats (1) to be arranged on a floor surface (F1, F2) of the corresponding room of the one or more rooms (R1, R2), wherein each prefabricated conduit mat (1) of the one or more prefabricated conduit mats (1) comprises a meandering conduit (2) for transporting a heating and/or cooling fluid, wherein the meandering conduit (2) comprises an inlet end (3) and an outlet end (4), wherein the inlet end (3) and the outlet end (4) extend beyond the prefabricated conduit mat (1) over a first extension length (E1) and a second extension length (E2) respectively;
and based on the room specific conduit layout for each room (R1, R2),
d) arranging the one or more prefabricated conduit mats (1) on the floor surface (F1, F2) of the corresponding room (R1, R2), and
e) routing the inlet end (3) and outlet end (4) of the meandering conduit (2) of each prefabricated conduit mat (1) of the one or more prefabricated conduit mats (1) along the floor surface (F1, F2) of the corresponding room (R1, R2).

2. The method according to claim 1, wherein the step of c) comprises providing each prefabricated conduit mat (1) of the one or more prefabricated conduit mats (1) as a roll, and wrapping the inlet end (3) and the outlet end (4) of the meandering conduit 2 around the roll.

3. The method according to claim 1 or 2, wherein the step of c) further comprises providing an installation guide (P) for each prefabricated conduit mat (1) of the one or more prefabricated conduit mats (1), and wherein the step of d) comprises arranging each prefabricated conduit mat (1) according to the corresponding installation guide (P) and wherein the step of c) comprises routing the inlet end (3) and outlet end (4) of each prefabricated conduit mat (1) according to the corresponding installation guide (P).

4. The method according to claim 3, where the step of c) further comprises attaching the installation guide (P) to each prefabricated conduit mat (1) of the one or more prefabricated conduit mats (1).

5. The method according to according to claim 3 or 4, further comprising providing the installation guide (P) with a visual marker (7), wherein the visual marker encodes a hyperlink.

6. The method according to claim 2 and any of claims 3-5, wherein the step of d) comprises unrolling each prefabricated conduit mat (1) of the one or more prefabricated conduit mats (1) on the floor surface (F1, F2) of the corresponding room (R1, R2) according to the installation guide (P).

7. The method according to any of claims 1-6, wherein the step of e) comprises routing the inlet end (3) and the outlet end (4) of each prefabricated conduit mat (1) of the one or more prefabricated conduit mats (1) along a free surface part (Fp) of the floor surface (F1, F2) of the corresponding room (R1, R2) not covered by the one or more prefabricated conduit mats (1).

8. The method according to claim 7, further comprising routing the inlet end (3) and outlet end (4) of one or more prefabricated conduit mats (1) of the corresponding room (R1, R2) along the free surface part (Fp) in meandering manner.

9. The method according to any of claims 1-8, wherein the meandering conduit (2) of each prefabricated conduit mat (1) of the one or more prefabricated conduit mats (1) is a double meandering conduit (2) comprising two spaced apart parallel meandering conduit lines (2a, 2b).

10. The method according to any of claims 1-9, wherein each prefabricated conduit mat (1) of the one or more prefabricated conduit mats (1) comprises a substrate (5) having affixed thereto the meandering conduit (2).

11. The method according to claim 10, wherein the step of d) comprises detaching at least in part the meandering conduit (2) from the substrate (5), and rearranging the meandering conduit (2) along the substrate (5).

12. The method according to any of claims 1-11, wherein the first extension length (E1) and the second extension length (E2) are equal.

13. The method according to any of claims 1-11, wherein the first extension length (E1) and the second extension length (E2) are unequal.

14. The method according to any of claims 1-13, wherein the building (B) comprises a corridor (C), and wherein the step of e) further comprises routing the inlet end (3) and outlet end (4) of one or more prefabricated conduit mats (1) arranged in one or more rooms of the one or more rooms (R1, R2) along a floor surface (Fc) of the corridor (C).

15. The method according to claim 14, wherein the step of e) further comprises routing the inlet end (3) and outlet end (4) in meandering fashion along the floor surface (Fc) of the corridor (C).
